# EUROPEAN PATENT APPLICATION

(11) **EP 2 737 836 A2**
(43) Date of publication of application: **04.06.2014**
(21) Application number: 13192200.7
(22) Date of filing: 08.11.2013
(51) Int. Cl.: A47K 10/48, E03C 1/04

(54) **A hand dryer**

(30) Priority: 03.12.2012 GB 201221732
(71) Applicant: Dyson Technology Limited, Malmesbury, Wiltshire SN16 0RP (GB)
(72) Inventor: Joynt, Michael, Malmesbury, Wiltshire SN16 0RP (GB); Vuijk, Remco, Malmesbury, Wiltshire SN16 0RP (GB)
(74) Representative: Lobban, Colin

(57) **Abstract**

A hand dryer for drying a user's hands by means of airflow discharged through an air outlet on the hand dryer. The airflow is generated by a motor-driven fan unit which is spring-mounted on a fixed part of the hand dryer via a plurality of coil springs.

## Description

The present invention relates to the field of hand dryers.

There are various designs of hand dryer on the market, which are typically installed in public washrooms as an alternative to paper towels.

Hand dryers rely on airflow to dry a user's hands. The airflow is typically discharged through one or more air outlets on the hand dryer and the user holds the hands in close proximity to the air outlet(s) so that the airflow is directed onto the user's hands to provide a drying effect.

The principal drying mechanism may differ between different types of hand dryer. The drying mechanism may be evaporative, in which case the airflow will tend to be heated. Alternatively, the drying mechanism may rely mainly on a momentum-drying effect at the surface of the hands, in which case the airflow will tend to be discharged at high velocity (in excess of 80 m/s, and typically in excess of 140 m/s).

In each case, the airflow is often generated using a motor-driven fan unit which is located inside the hand dryer.

The fan unit will often be relatively heavy, and subject to vibration in use (caused by rotor imbalance etc.). This may generate excessive noise in a washroom environment, which is undesirable.

According to the present invention, there is provided a hand dryer for drying a user's hands by means of an airflow discharged through an air outlet on the hand dryer, the airflow being generated by a motor-driven fan unit, the fan unit being spring-mounted on a fixed part of the hand dryer via a plurality of coil springs.

The use of coil springs to mount the fan unit provides good vibration isolation of the fan unit from the fixed part of the hand dryer, reducing noise transmission through the fixed part in use.

The fixed part of the hand dryer may be a housing which houses the fan unit.

The use of coil springs allows convenient 'tuning' of the damping response. This can be achieved by setting the relative spring constants of the springs. This is more straightforward than tuning an elastomeric soft-mount, which may require complex profiling of the mount itself.

In a hand dryer, the coil springs may in particular require tuning to accommodate a 'recoil' force on the fan unit exerted by the airflow. The recoil force will be in the opposite direction to the airflow, and may be significant at start-up. Suitable tuning can be achieved by setting the individual spring constants of the springs so that an equivalent spring constant in the direction of the recoil force is greater than an equivalent spring constant in the direction opposite to the recoil force.

The plurality of coil springs may be arranged at an angle to the axis of rotation of the fan (the "fan axis") in order to provide both axial and radial support for the fan unit.

The plurality of coil springs may comprise two sets of coil springs, the sets being spaced axially along the fan axis. The number of springs in each set may be same, though this is not essential.

The springs in the first set may each extend at a first angle, so that they form a frusto-conical spring configuration for providing a uniform damping response.

At least some of the springs in the second set may also extend at the same, first angle to form a respective frusto-conical spring configuration. This respective frusto-conical spring configuration may be inverted with respect to the frusto-conical configuration of the first set of springs to provide bi-directional axial support for the fan unit.

The coil springs may be extension springs for resisting a tension load. This provides the advantage of a relatively short unloaded length for the spring, compared to a comparable-performing compression spring. This helps provide a compact mounting arrangement.

The minimum length of each extension spring will be its coil-bound length. This preferably corresponds to its unloaded length in order to minimise the unloaded length of the spring.

A coil-bound spring may transmit excessive vibration under compression. The compressive loads on the spring can be reduced by pivotally mounting one end of the spring to the fixed part and pivotally mounting the other end of the spring to the fan unit. A compressive load between the fan unit and the fixed part is thus taken up by pivoting movement of the spring, reducing force transmission through the spring. In a simple arrangement, the ends of the springs are provided with hooks or loops. These hooks or loop onto a corresponding eye or hook on the fan unit and the fixed part. This sort of hook and loop attachment allows a degree of pivoting movement for the spring.

In a particular configuration, the second set of springs can be divided into two groups: a first group in which the springs extend at the first angle - consistent with the first set of springs - to form a first frusto-conical configuration, and a second group in which the springs extend at a second angle to the fan axis to form a second frusto-conical configuration.

The springs in the first group may each have a first spring constant and the springs in the second group may each have a second spring constant, different from the first spring constant.

The first group of springs may be located on one side of the fan unit, and the second group of springs may be located on an opposite side of the fan unit. Thus, the second set of springs provides an asymmetric radial damping response. The net response is determined by extension of springs on one side of the fan unit and the compression of springs on the opposite side of the fan unit. If extension springs are used, then the compressive resistance of the springs in their coil-bound state can be reduced significantly by pivotally mounting the extension springs in the manner described above. In this case the damping response is determined effectively only by extension of the springs on the relevant side of the fan unit: so, very stiff springs may be used to resist a large force exerted on the fan unit in one direction, but damping of forces in the opposite direction can be controlled by much weaker springs on the opposite side of the fan unit.

If the airflow is discharged with a radial component, then this sort of asymmetric arrangement has particular application in damping the resulting recoil force exerted on the fan unit. Thus, in one arrangement, the fan unit may comprise a discharge nozzle on one side of the fan unit for discharging the airflow outwardly away from the fan axis, and the discharge nozzle may be located on the same side of the fan unit as the second group of springs. At least one (and preferably all) of the individual springs in the second group may be stiffer than at least one (and preferably all) of the individual springs in the first group.

The discharge nozzle may be located axially nearer the second set of springs.

Embodiments of the invention will now be described with reference to the accompanying drawings, in which:
Figure 1 is a perspective view of a combined washing/drying station in a washroom;
Figure 2 is a section through the combined washing drying station in Figure 1;
Figure 3 is a perspective view of an arrangement for use in the combined washing/drying station in Figure 1;
Figure 4 is an exploded view of a blower, or compressor;
Figure 5 is a part-sectioned perspective view of a fan unit;
Figure 6 is a part-section perspective view of a blower module forming part of the arrangement in Figure 3;
Figure 7 is a part-sectioned perspective view illustrating spring-mounting of the fan unit inside a motor bucket;
Figure 8 is a perspective view of the fan unit in isolation, illustrating the configuration of the spring-mounting arrangement;
Figure 9 is a plan view corresponding to Figure 8;
Figure 10 is a close-up view of the mounting arrangement for one of the springs shown in Figures 8 and 9;
Figure 11 is a sectional perspective view of a filter module for use in the arrangement shown in Figure 3;
Figure 12 is a part-sectioned perspective view showing attachment of the filter module to the blower module;

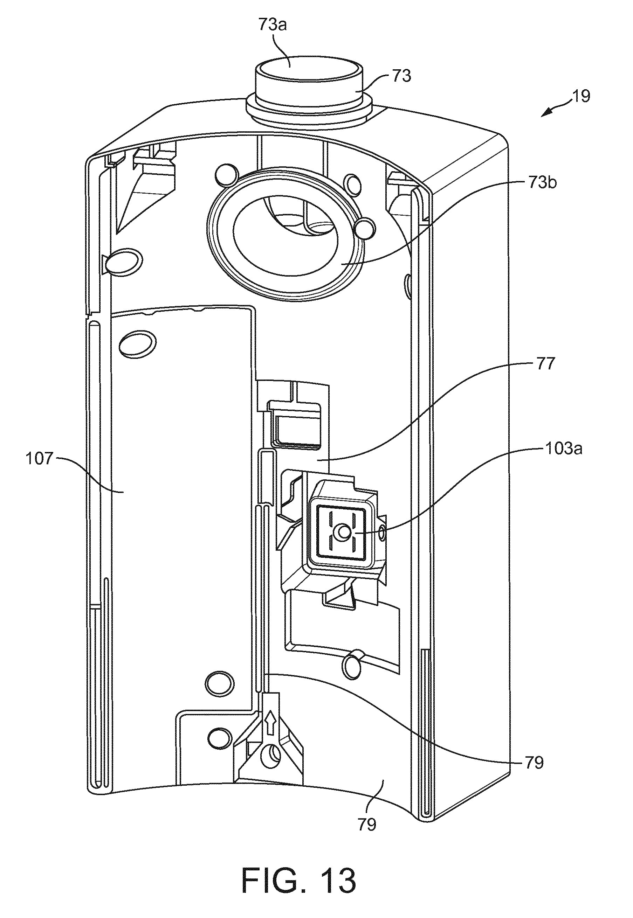

Figure 13 is a perspective view of a connector unit used in the arrangement of Figure 3;
Figure 14 is a sectional perspective view through the connector unit in Figure 13;
Figure 15 is a perspective view of a back plate forming part of the connector unit, including some components mounted onto the back plate;
Figure 16 is perspective view of a front cover forming part of the connector unit, showing the inside of the front cover; and
Figure 17 is frontal view of the back plate in Figure 15, but with some of the mounted components removed, for clarity.

### Combined washing/drying station

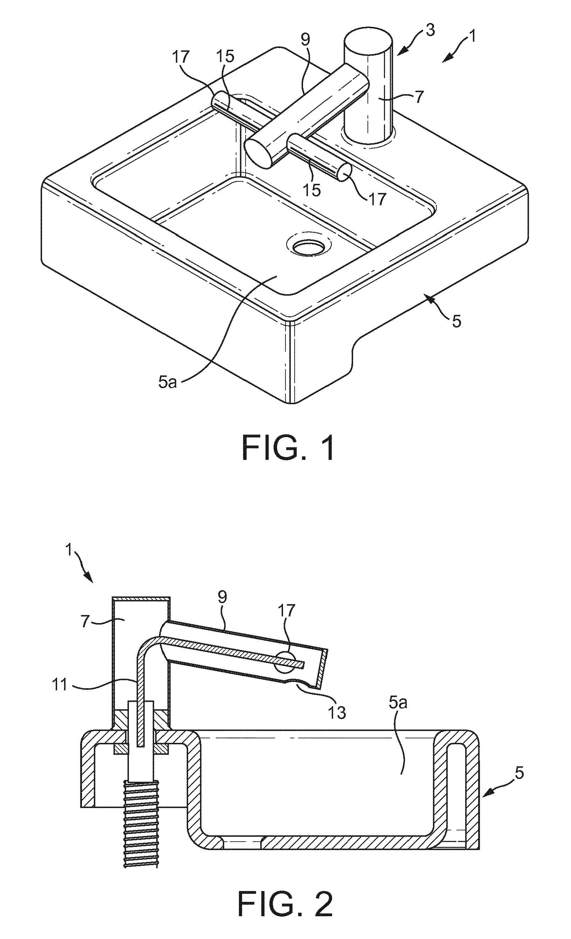

Figures 1 and 2 show a combined washing/drying station 1 in a washroom.

The washing/drying station 1 incorporates a water tap, or faucet, for washing a user's hands and a hand dryer for subsequently drying a user's hands.

The water faucet is incorporated as part of a fixture 3 which is mounted next to the basin 5a of a sink 5.

The fixture 3 comprises a main body 7 which sits adjacent the basin 5a of the sink 5 and a spout 9 which projects from the main body 7 out over the basin 5a of the sink 5.

On demand, water for washing is supplied from a main supply line (not shown) via a water supply pipe 11 (Figure 2), which runs inside the main body 7 and the spout 9 to a downwardly-facing water outlet 13 (Figure 2) provided at the fore-end of the spout 9. The water tap is configured for "hands-free" operation using a conventional sensor and control loop (not shown): water is discharged through the water outlet 13 in response to detection of a user's hands in a washing position. Alternatively, the water tap may be configured for manual operation.

The fixture 3 also comprises an air outlet of the hand dryer, and the hand dryer utilizes the inside of the main body 7 and the spout 9 as an air duct for feeding this air outlet. In this case, there are two air-knife outlets 15 on the fixture - one for each hand. The air-knife outlets are provided either side of the spout 9, extending along supply ducts 17 which branch off from the spout 9.

The hand dryer is configured for "hands-free" operation using a conventional sensor and control loop (not shown), which automatically switches on a fan unit in response to detection of a user's hands in a drying position (distinguishable from the aforementioned washing position). The fan unit then drives an airflow through the fixture 3 and out through the air-knife outlets 15 for drying the user's hands. Alternatively, the hand dryer may be configured for manual operation.

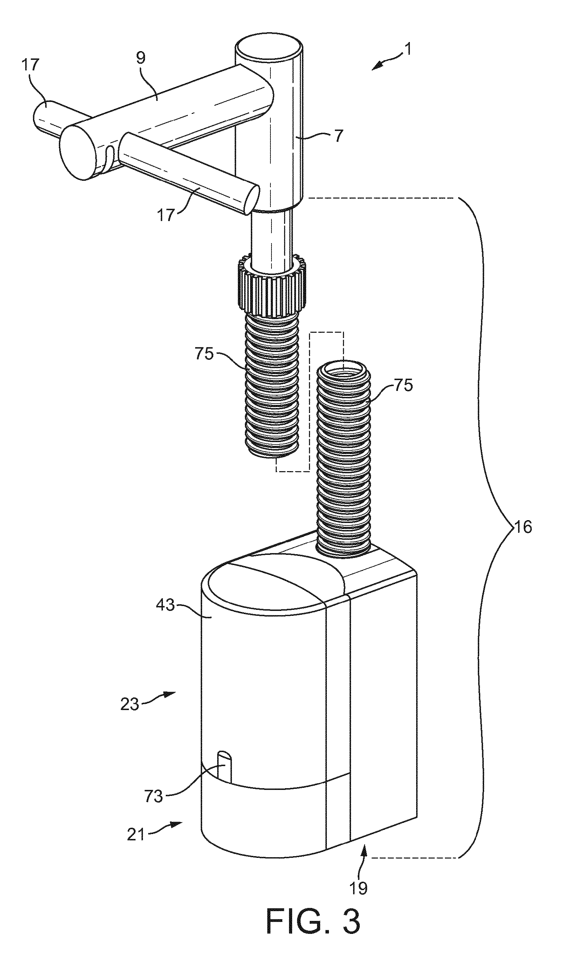

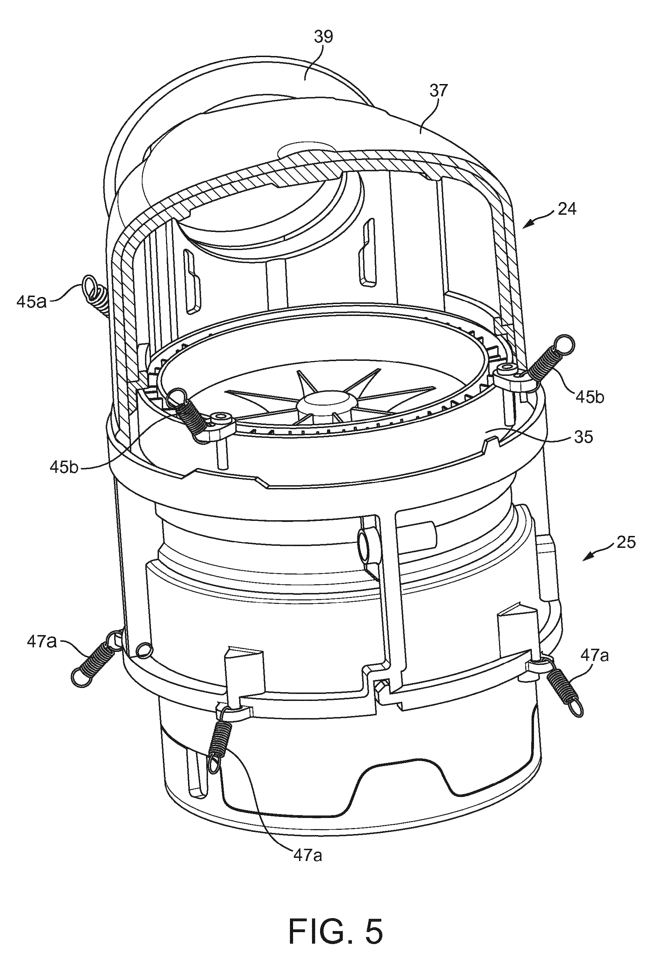

The fan unit 24 is shown in isolation in Figure 5, It forms part of a lower assembly which is hidden away under the countertop in Figures 1 and 2. You can see the lower assembly 16 in Figure 3. It comprises three modular components: a connector unit 19, a filter module 21 and a blower module 23 which comprises the fan unit.

### The fan unit

The fan unit 24 comprises a centrifugal blower, or compressor, 25.

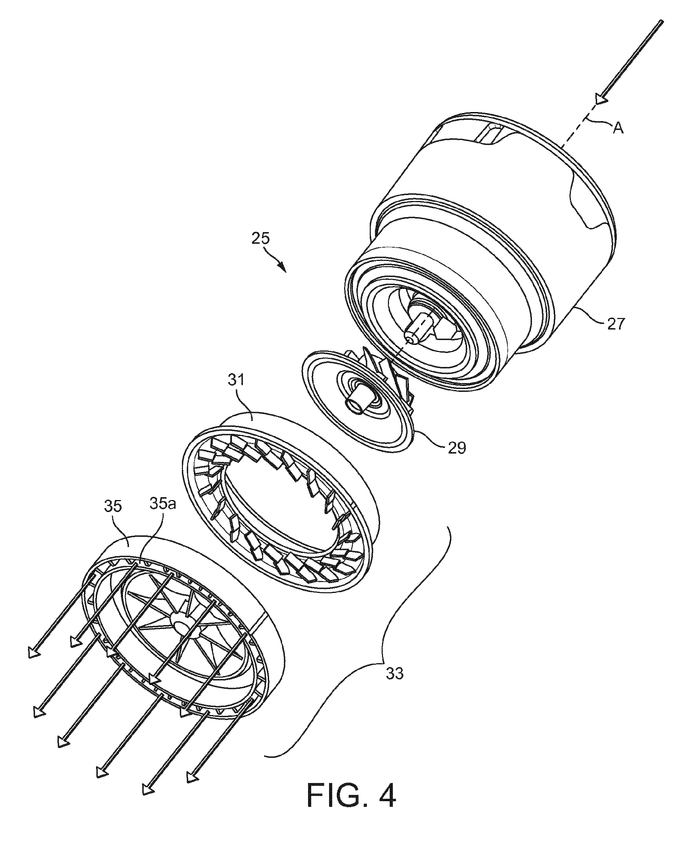

An exploded view of the centrifugal blower 25 is shown in Figure 4. It comprises a drive unit 27 incorporating an electric motor (not shown), a centrifugal fan impeller 29 which connects to the output shaft of the motor, and a diffuser 33.

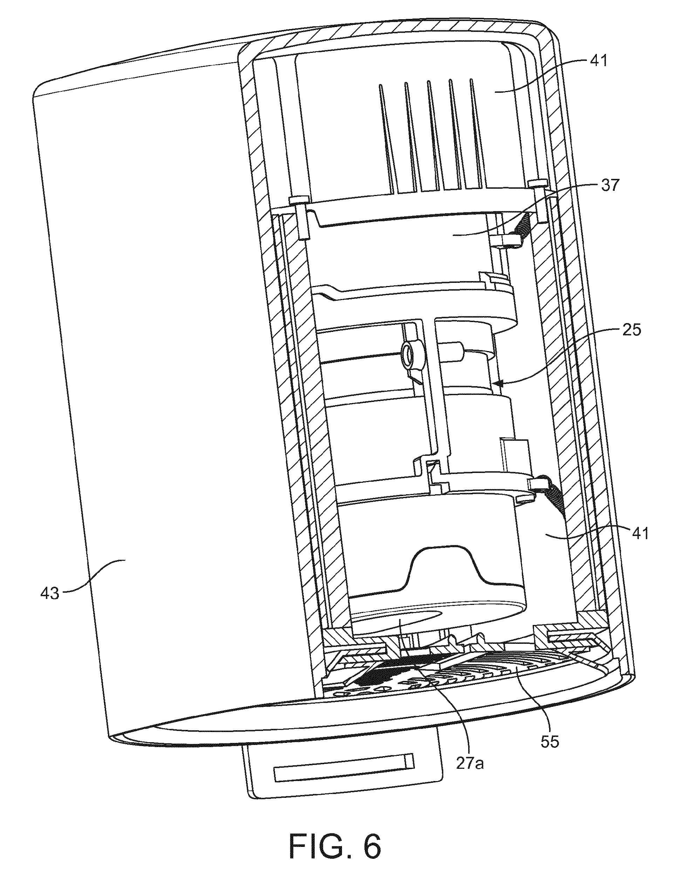

Air is drawn axially into the blower 25 by the fan impeller 29, through an air intake 27a on the drive unit 27 (the air intake 27a is not visible in Figure 4, but is just visible in Figure 6).

The diffuser 33 comprises a diffuser ring 31, incorporating a number of swirl vanes for static pressure recovery, and a diffuser cap 35 which fits onto the diffuser ring 31 and which channels airflow from the impeller 29 out through an annular fan outlet 35a, as indicated by the arrows (in use, there will be a certain degree of residual swirl to the airflow as it leaves the fan outlet 35a - not illustrated in Figure 4).

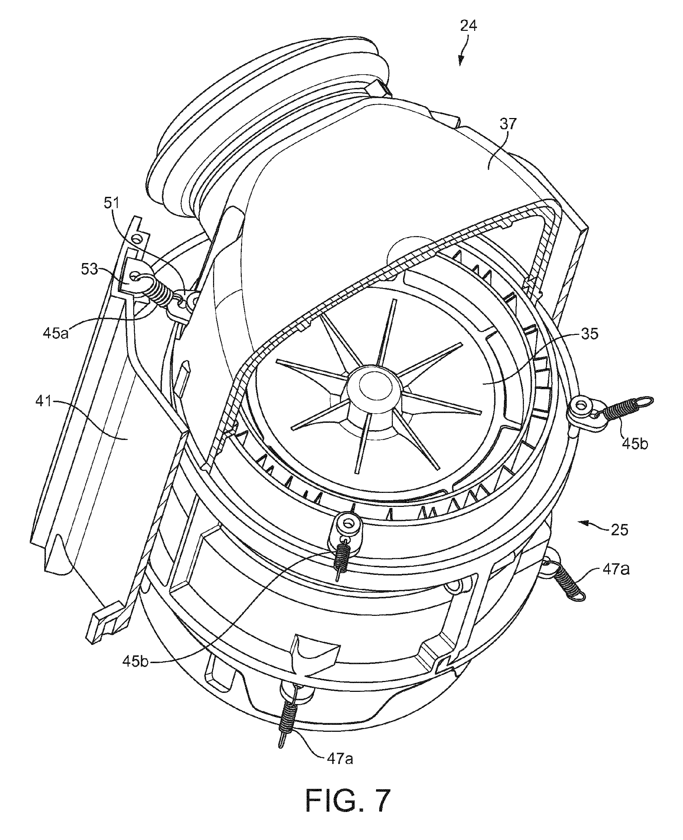

The fan unit 24 also comprises a manifold 37 which fits onto the diffuser cap 35. You can see this in Figure 5. The manifold 37 collects the airflow and discharges it radially through a nozzle 39 on the side of the manifold 37 (see also Figure 7).

The fan unit 24 is spring-mounted vertically inside a motor bucket 41 fixed to an external casing 43 of the blower module 23, with the fan outlet 35a facing upwards (see Figure 7), the air intake 27a facing downwards (Figure 6) and the rotation axis A of the impeller (hereafter the "fan axis") extending vertically.

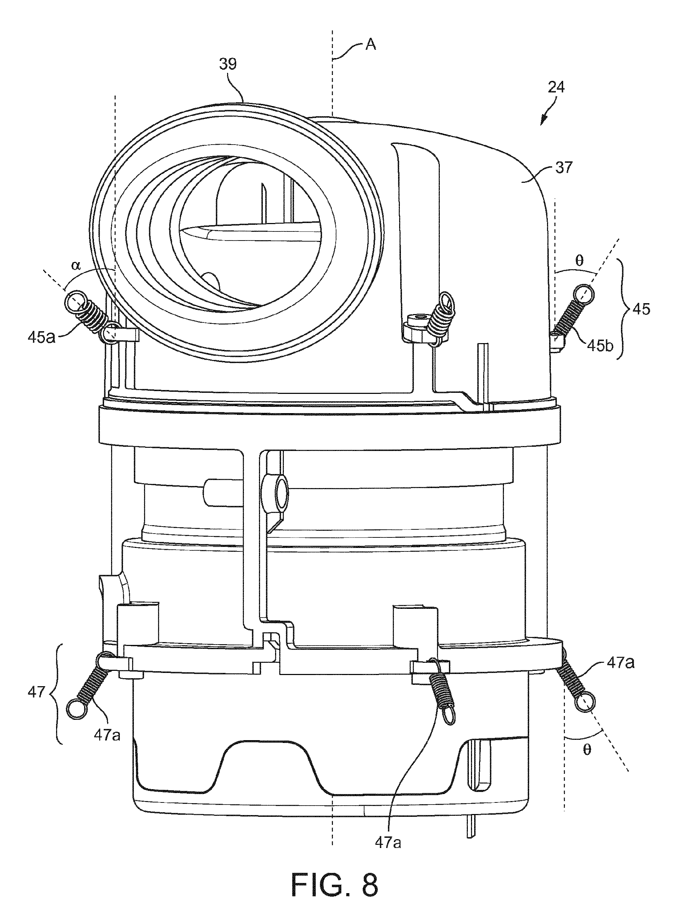

The spring mounting arrangement comprises an upper set of springs 45 and a lower set of springs 47, spaced axially (along the fan axis) from the upper set of springs 45. You can see these sets of springs clearest in Figure 8.

The lower set of springs 47 comprises four coil extension springs 47a (three of which are visible in Figure 8) spaced equi-angularly around the fan axis A. Each spring 47a extends along the fan axis A at a plane angle θ to the fan axis, in this case 30 degrees. The lower set of springs is thus arranged in a frusto-conical configuration, with cone angle θ=30°. The frusto-conical configuration allows the springs 47a to resist a load having both an axial and a radial component. The springs 47a have the same spring constant *k =* 1.1 N/mm, and the same length *l* =12.7mm in order to provide a uniform load bearing response.

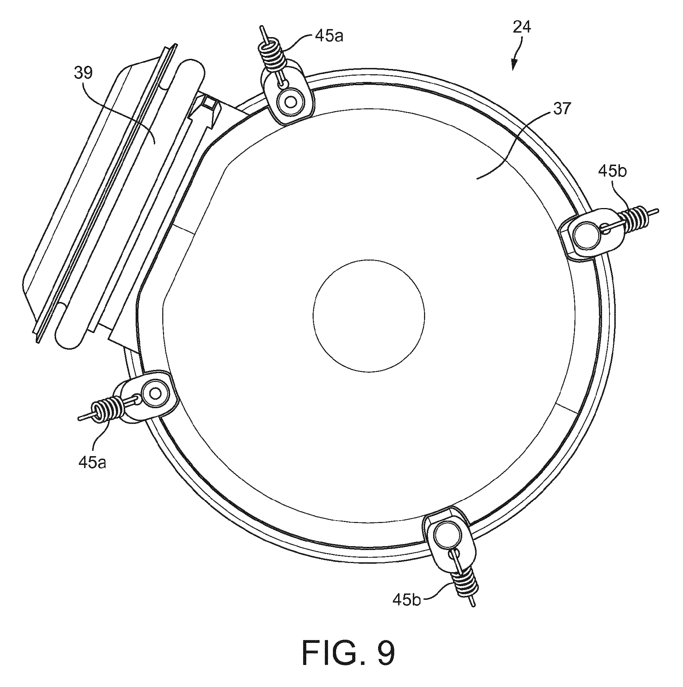

The upper set of springs 45 likewise comprises four coil extension springs spaced equi-angularly around the fan axis. The springs are arranged into two groups of two: two relatively stiff springs 45a *(k* = 7.5 N/mm, *l* =12.7mm) and two relatively weak springs 45b *(k* = 1.1 N/mm, *l* =12.7mm). You can see the two groups of springs in Figure 9.

The two relatively weak springs 45b are arranged in a first frusto-conical configuration, having a cone angle θ = 30°, which configuration is inverted with respect to the frusto-conical configuration of the first set of springs to provide bi-directional axial support for the fan unit 24.

The two relatively stiff springs 45a are arranged in a second frusto-conical configuration. The cone angle ∞ of this second frusto-conical configuration - corresponding to the plane angle ∞ of the springs 45a to the fan axis A - is different from the cone angle θ of the first frusto-conical configuration. In this case ∞ = 50°

The stiff springs 45a are arranged on the same side of the fan unit 24 as the discharge nozzle 39 in the manifold 37. The weak springs 45b are arranged on the opposite side of the fan unit 24. This provides the upper set of springs 45 with a bi-directional asymmetric response characteristic: the stiff springs 45a provide a 'hard' response characteristic in order to resist the lateral recoil force on the fan unit 24 as airflow is discharged through the nozzle 39 - in particular to control the "kick" of the fan unit 24 on start-up - whereas the relatively weak springs 45b provide a more compliant, 'soft' response characteristic in the opposite direction, better suited for damping smaller amplitude vibrations which occur in the steady state following the start-up phase of the blower 25.

Compression springs may be used instead of extension springs, but extension springs provide the advantage of a relatively short unloaded length.

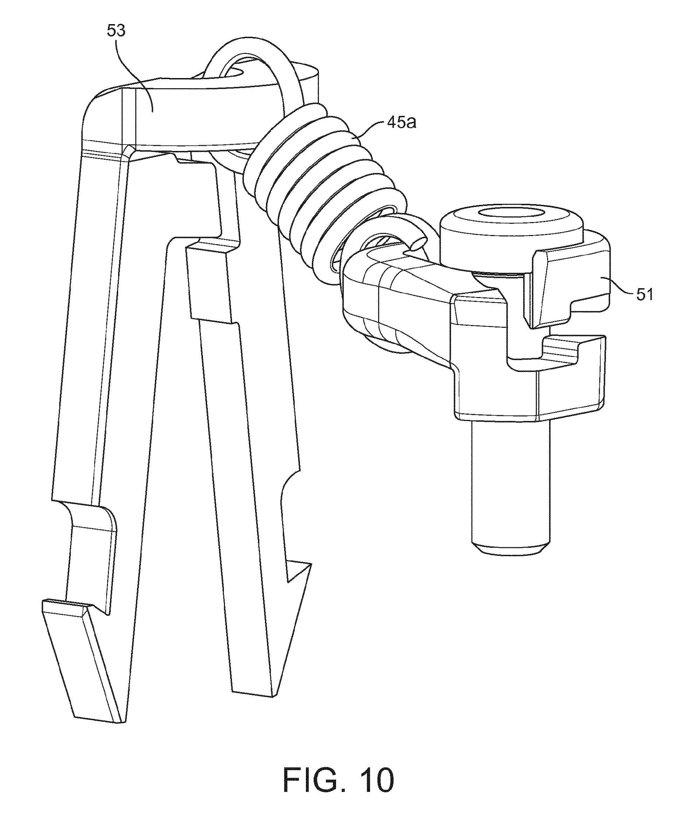

The springs 45a, 45b, 47a are coil-bound in their unloaded state, to minimize the unloaded length of the springs. To reduce compressive loading on the springs each spring 45a, 45b, 47a is pivotally mounted at both ends. The mounting arrangement is shown in Figures 7 and 10, in this case for one of the stiff springs 45a. The same arrangement is used for each of the other springs 45b, 47a. The spring 45a has looped ends, and is secured in place at one end by a washer 51 which is screwed down onto the fan unit 24 and at the other end by a snap ring 53which snap-fits into a channel formed in the wall of the motor bucket 41. This arrangement permits a degree of pivoting movement of the spring 45a to allow relative displacement of the motor bucket 41 and fan unit 24 without imposing excessive compressive load on the spring 45a.

The motor bucket 41 is housed inside the external casing 43 of the blower module 23. A grille 55 (Figure 6) is provided on the bottom of the motor bucket 41 - near to the air intake 27a on the fan unit 24 - which acts as the air intake for the blower module 23.

### The filter module

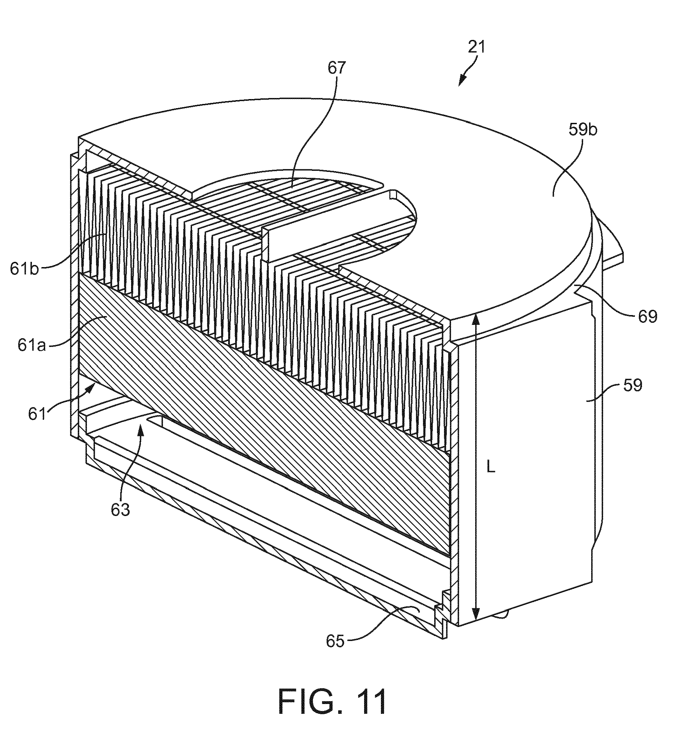

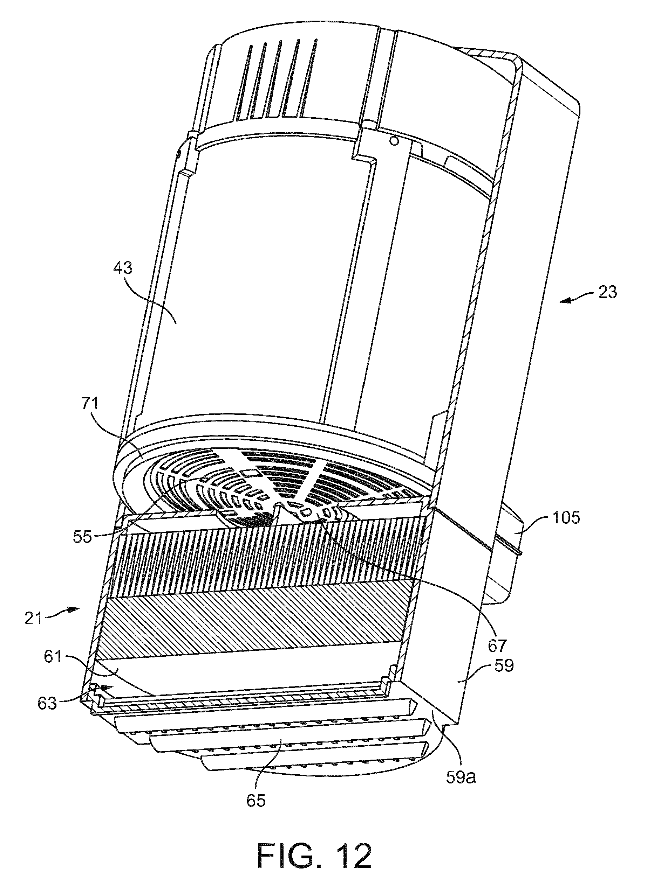

The filter module 21 is shown in isolation in Figure 11 and connected to the blower module 23 in Figure 12.

The filter module 21 comprises a filter casing 59 which houses a filter 61.

The filter casing 59 comprises a chamber 63. At one end of the chamber 63 is an airflow inlet, formed in a lower end face 59a of the casing 59. At the opposite end of the chamber 63 is an airflow outlet, formed in an upper end face 59b of the casing 59.

The airflow inlet to the filter casing 59 is a "louvred" inlet comprising a series of intake slots 65. The airflow outlet is a circular outlet 67 formed at the centre of the upper end face 59b.

The upper end face 59b is rebated around its perimeter for mating engagement with the lower end of the blower module 23 in use (you can see the rebate 69 best in Figure 11). A seal 71 around the perimeter of the grille 55 seals against the upper end face 59b of the filter casing 59, around the outlet 67. Airflow is thus drawn in to the blower module 23 via the chamber 63 inside the filter casing 59, passing into the blower module 23 through the airflow outlet 67 and the grille 55. The filter module 21 is provided with a catch 73 (Figure 3) which catches against a catch surface on the blower module 23 to secure the filter module 21 to the blower module 23.

The filter 61 is arranged inside the filter casing 59 so that it partitions the chamber 63 - the filter 61 does not merely line the chamber 63. Thus, airflow passing through the chamber 63 necessarily passes through the filter 61.

The filter 61 is a HEPA filter, comprising a layer of fleece 61a and a layer of HEPA media 61b, such as Technostat™. The precise configuration of the filter 61 may vary.

The chamber 63 acts as an expansion chamber which helps to muffle sound propagation back through the grille 55, originating from the fan unit 24 (the sound will propagate in the opposite direction to the airflow).

Initial tests suggest that the acoustic impedance of the filter 61 has a beneficial effect on acoustic performance by reducing the low-pass cut-off frequency of the expansion chamber so that the acoustic impedances of the expansion chamber 63 and the filter 61 interact to provide a better performing low-pass acoustic filter. This reduction in the cut-off frequency helps to suppress low frequency noise transmission externally through the intake slots 65.

The reduction in the cut-off frequency is achieved without compromising the exit airspeed at the air-knife outlets 15 by taking advantage of the inherent acoustic impedance of the filter 61 inside the hand dryer, and without having to increase the overall length L of the expansion chamber 63.

### The connector unit

The connector unit 19 is arranged to be mounted on a wall using conventional wall fixings. Generally, the connector unit 19 will be located under the countertop and will therefore be hidden away from the user.

The connector unit 19 acts as a hub for various connections. Firstly, the connector unit 19 connects the water outlet 13 on the fixture 3 to the mains water supply (not illustrated). Secondly, the connector unit 19 connects the blower module 23 (and various other components) to the mains power supply (not illustrated). Thirdly, the connector unit 19 connects the air-knife outlets 15 on the fixture 3 to the discharge nozzle 39 on the fan unit 24.

### Air connection

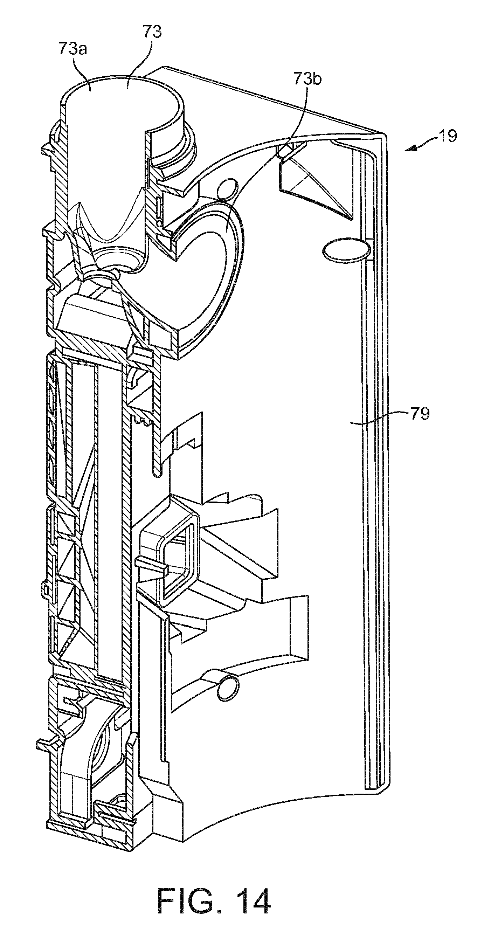

The air-knife outlets 15 are connected to the discharge nozzle 39 on the fan unit 24 via an elbow duct 73, which runs through the top of the connector unit 19. You can see this elbow duct in Figure 14. The air-knife outlets 15 connect to one end of the elbow duct 73 via an air hose 75 (Figure 3). This air hose 75 is connected at its upper end to the main body 7 of the fixture 3 (underneath the countertop in Figure 1) and at its lower end to the end 73a of the elbow duct 73. The discharge nozzle 39 on the blower module 23 seals against the opposite end 73b of the elbow duct 73, via a flexible seal.

In use, air is discharged from the blower module 23 into the elbow duct 73 and is then carried up the air hose 75 to the hollow main body 7, before eventually being forced out through the air-knife outlets 15.

A resilient, sliding catch 77 is provided on a front cover 79 of the connector unit 19. The catch 77 is spring-biased for locking engagement with a catch projection (not shown) on the blower module 23 in order to secure the blower module 23 on the connector unit 19. The catch 77 holds the discharge nozzle in sealing engagement with the respective end 73b of the elbow duct 73.

A push rod 79 is provided for manual release of the catch; the push rod 79 is hidden in use behind the blower module 23 and the filter module 21 to discourage tampering, but can be accessed from underneath the connector unit 19 to release the catch 77 as required to remove the blower module 23.

### Water connection

Connection to the mains water supply is via an electrically-actuated flow valve - in this case a solenoid valve 81 - which is housed inside the connector unit 19. The inlet port 81b of the solenoid valve 81 is arranged to be plumbed into the mains water supply and - once it is plumbed in - the solenoid valve 81 acts as a flow valve which isolates the mains water supply at the connector unit 19.

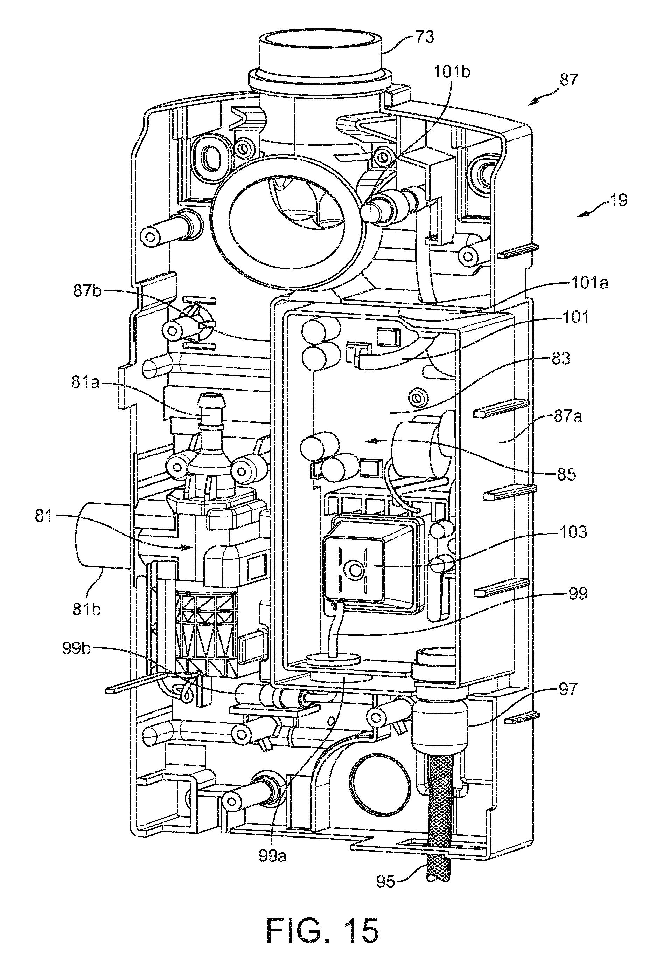

The water outlet 13 connects to the outlet port 81a of the solenoid valve 81 via the flexible water supply pipe 11 (Figure 2), which runs down through the inside of the air hose 75 and is routed externally through a hole in a wall of the elbow duct (the flexible supply pipe is not actually shown in Figure 15). A sealing grommet is used to provide a functioning air-seal between the wall of the elbow duct 73 and the flexible water supply pipe 11.

The flexible water supply pipe 11 engages with the outlet port 81a of the solenoid valve 81 in a conventional push-fit.

### Power connections

Power connections are made via a PCB 83 housed inside the connector unit 19.

The PCB 83 is housed inside a sealed "dry compartment" 85 inside the connector unit 19. This configuration isolates the PCB 83 from the solenoid valve 81. Consequently, if the solenoid valve 81 is faulty then water cannot easily leak onto the PCB 83.

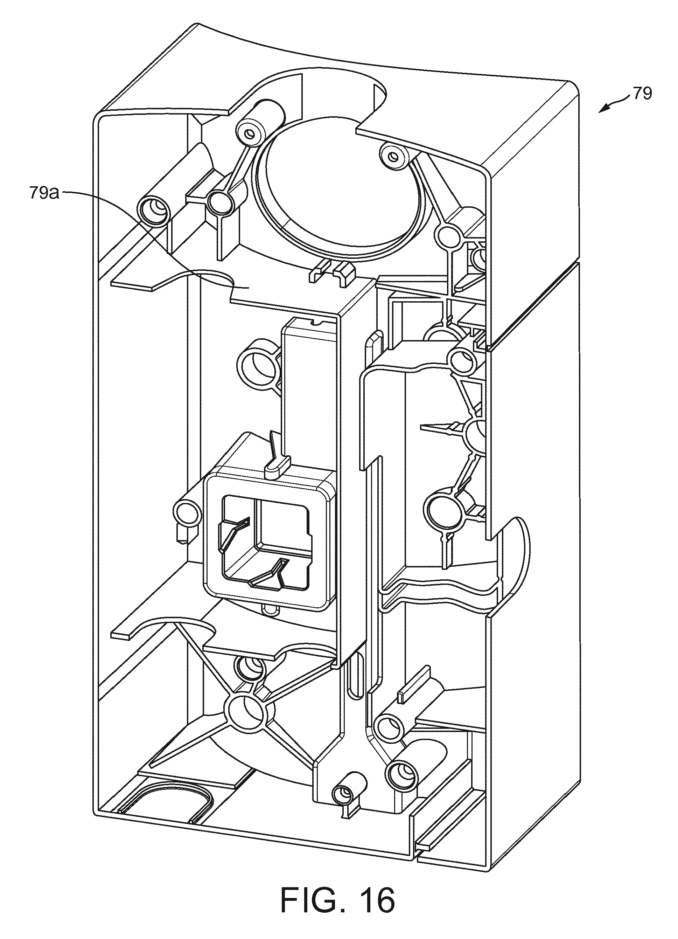

The compartment 85 is a two-part assembly. The first part of the compartment 85 comprises a rectangular, inner perimeter wall 87a provided on a back-plate 87 of the connector unit 19. The PCB 83 and other electrical components are mounted on the back-plate 87, inside the boundary of this perimeter wall 87a. The second part of the compartment 85 is provided on the inside of the front cover 79 of the connector unit 19 (Figure 16), which fits over the back-plate 87. The second part of the compartment comprises a perimeter wall 79a which fits around the outside of the perimeter wall 87a on the back-plate 87 so that the two perimeter walls 79a, 87a form a perimeter labyrinth seal. This effectively seals the compartment 85 against water ingress.

As an additional precaution against water ingress, an outer perimeter wall 87b is provided on the back-plate 87. This outer perimeter wall 87b extends around the outside of the perimeter wall 79a on the front cover 79, so that the three perimeter walls 79a, 87a, 87b together form a double labyrinth seal around the perimeter of the compartment 85. In this particular arrangement, the outer perimeter wall 87b only extends on three sides of the inner perimeter wall 87a - because the fourth side of the intermediate perimeter wall 79a forms part of an external wall of the connector unit 19 - but an outer perimeter wall may alternatively be provided which extends all the way around the respective inner perimeter wall, as appropriate.

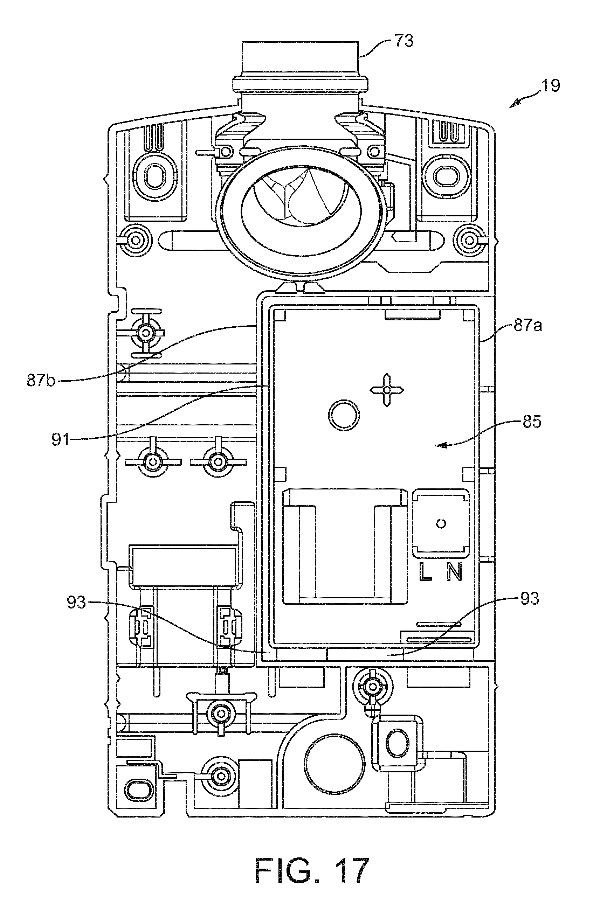

A gasket 91 is provided on the back-plate 87 (Figure 17), running in the channel between the inner perimeter wall 87a and the outer perimeter wall 87b. This gasket 91 forms a seal against the end of the intermediate perimeter wall 79a, to further reduce the chances of water ingress through the labyrinth seal. The gasket 91 may extend all the way round the perimeter of the compartment 85, but in this case only extends part-way around the perimeter to allow for the positioning of drain outlets 93 between the inner and outer perimeter wall 87a, 87b. These drain outlets 93 act as overflow outlets which prevent the compartment 85 from filling up with water in the event that there is a sealing failure somewhere around the perimeter of the compartment 85. The drain outlets 93 are located so that they are at the bottom of the compartment 85 when the connector unit is in its normal orientation in use (the orientation shown in Figures 14-17).

A high-voltage side of the PCB 83 is hard-wired to the mains power supply via a mains wiring loom 95 which runs externally through a cable gland 97 in the perimeter wall(s) of the compartment 85. The cable gland 97 seals around the loom 95 to prevent water ingress into the compartment 85.

In the present context, the term "hard wired" is intended as a catch-all term to cover any permanent or semi-permanent electrical connection. The connection need not be via wiring, specifically.

The solenoid 81, and a sensor on the fixture 3, connects to a low-voltage side of the PCB 83 inside the compartment 85, via respective wiring looms 99, 101 which run externally through sealing grommets 99a, 101a to prevent water ingress into the compartment 85. Connection to the solenoid 81 and sensors is via respective plug connectors 99b, 101b provided at the end of the wiring looms 99, 101 - neither the solenoid 81 nor the sensors are hard-wired to the PCB 83. This allows easy disconnection of the sensors and solenoid 81 for maintenance or replacement.

Similarly, the blower module 23 is not hard-wired to the PCB 83. Instead, connection is via a pin socket 103 which is hard-wired to the high-voltage side of the PCB 83. A complementary pin connector 105 (just visible in Figure 12) is provided on the blower module 23, which plugs into this pin socket 103. This arrangement allows easy disconnection of the blower module 23 from the mains power supply for ease of servicing and replacement.

The pin socket103 is shrouded. The shroud 103a - in this case a rubber mask - helps prevent water ingress in the event of failure of the solenoid valve 81, but also helps prevent accidental contact with the high-voltage live terminals of the pin socket 103 in the absence of the blower module 23.

### Installation/servicing

Installation of the connector unit 19 requires connection of the high voltage side of the PCB 83 to the mains power supply and connection of the solenoid valve 81 to the mains water supply.

Connection of the high voltage side of the PCB 83 to mains-power requires removal of the front cover 79 of the connector unit 19 to access the inside of the compartment 85. This is preferably therefore carried out prior to connecting the solenoid valve 81 to the mains-water supply to prevent risk of water contacting live components.

Once the front cover 79 is replaced, the compartment 85 is sealed against water ingress, and subsequently connection to the mains-water supply can safely be made without shutting off mains power to the connector unit 19. This may be particularly advantageous in large commercial buildings, where permits may be required to shut off the mains power; here, it may be desirable to connect to the mains water supply sometime after initial connection to the mains power supply - using a qualified plumber as opposed to a qualified electrician - and the cost of seeking multiple permits to shut off the mains power may be burdensome.

Installation of the connector unit 19 may form part of an initial installation phase, for example during the construction phase of a new building. It may be preferable in such circumstances to delay installation of the fixture 3 until "fitting out" the building. In the meantime, the solenoid valve 81 effectively isolates the connector unit from the mains water supply and the shrouded pin socket 103 reduces the risk of physical contact with the live terminals.

An access panel 107 is provided in the front cover 79 of the connector unit 19 to provide access to the solenoid valve 81 without removing the front cover 79. During subsequent installation of the fixture 3, this panel 107 provides access for push-fitting the water supply pipe 11 onto the outlet port 81 a of the solenoid valve 81.

The low-voltage plug connectors 99b, 101b are also accessible through the access panel 107 and can be connected to the solenoid 81 and sensor cable (not shown), again without removing the front cover 79 of the connector unit 19.

The air hose 75 connects externally to the elbow duct 73 and so no access inside the connector unit 19 is required to fit the air hose. The air hose 75 may simply be secured in place using one or more cable ties (not shown).

The blower module 23 and filter module 21 is installed simply by docking it with the connector unit 19. The pin connector 105 engages the pin socket 103 to provide mains power to the fan unit 24. The discharge nozzle 39 engages the end of the elbow duct 73 for connecting the fan unit24 to the air-knife outlets 15 on the fixture 3. The blower module23 is held in position by the resilient catch 77 on the connector unit 19.

The blower module 23 is preferably installed after the fixture 3, so that the blower module 23 does not hinder access to the access panel 107, but where the blower module 23 has already been installed it may easily be removed to allow installation of the fixture 3, simply by releasing the catch 77 on the connector unit 19.

Following installation, the access panel 107 provides access for maintenance, servicing or repair of the solenoid valve 81 without removing the front cover 79.

## Claims

1. A hand dryer for drying a user's hands by means of airflow discharged through an air outlet on the hand dryer, the airflow being generated by a motor-driven fan unit, the fan unit being spring-mounted on a fixed part of the hand dryer via a plurality of coil springs.

2. A hand dryer according to claim 1, wherein the fan unit comprises a fan for generating the airflow, the plurality of springs comprises two sets of springs, and the two sets of springs are spaced axially along the axis of rotation of the fan.

3. A hand dryer according to claim 2, wherein springs extend at an angle to the axis of rotation of the fan.

4. A hand dryer according to claim 3, wherein the springs in a first set each extend at a first angle to form a respective frusto-conical spring configuration, and at least some of the springs in the second set also extend at the same, first angle to form a respective frusto-conical spring configuration.

5. A hand dryer according to claim 4, wherein a first group of the springs in the second set extend at the first angle to form a first frusto-conical spring configuration and a second group of the springs in the second set extend at a second angle to form a second frusto-conical spring configuration.

6. A hand dryer according to claim 5, wherein the springs in the first group each has a first spring constant and the springs in the second group each has a second spring constant, different from the first spring constant.

7. A hand dryer according to claim 6, wherein the first group of springs are located on one side of the fan unit, and the second group of springs are located on an opposite side of the fan unit.

8. A hand dryer according to claim 7, further comprising a discharge nozzle on one side of the fan unit for discharging the airflow outwardly away from the fan axis, the discharge nozzle being located on the same side of the fan unit as the second group of springs.

9. A hand dryer according to claim 8, wherein the discharge nozzle is located axially nearer the second set of springs.

10. A hand dryer according to any preceding claim, in which the springs are extension springs.

11. A hand dryer according to claim, 10 in which each spring is pivotally mounted at one end to the fan unit and pivotally mounted at its other end to the fixed part of the hand dryer.
